Europäisches Patentamt

European Patent Office

Office européen des brevets

(19)

(11) EP 0 860 927 A1

(12) **EUROPÄISCHE PATENTANMELDUNG**

(43) Veröffentlichungstag:
26.08.1998 Patentblatt 1998/35

(51) Int Cl.[6]: **H02H 9/04**, H02H 7/24

(21) Anmeldenummer: 98890031.2

(22) Anmeldetag: 11.02.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 12.02.1997 AT 226/97

(71) Anmelder: Felten & Guilleaume Austria AG
3943 Schrems (AT)

(72) Erfinder: Bachl,Hubert Ing
1170 Wien (AT)

(74) Vertreter: Gibler, Ferdinand
Patentanwalt
Dipl.-Ing. Dr. Ferdinand Gibler
Dorotheergasse 7
1010 Wien (AT)

(54) **Schutzschaltungsanordnung für Überspannungsableiter**

(57)    Schutzschaltungsanordnung für eine in ein Spannungsversorgungsnetz geschaltete Überspannungsableiter-Anordnung, die zwischen dem bzw. den Phasenleitern (L bzw. L1, L2, L3) und dem Neutralleiter (N) oder der Anlagenerde (PE) geschaltete erste Ableiter (6) und einen zwischen Neutralleiter (N) und Anlagenerde (PE) geschalteten zweiten Ableiter (5) aufweist, umfassend eine zumindest den Strom durch den zweiten Ableiter (5) erfassende Detektionseinrichtung (2) und eine von der Detektionseinrichtung (2) auslösbare Schalteinrichtung, wobei die Schalteinrichtung gebildet ist aus einer Kontakteinrichtung (10), welche von einer mit der Detektionseinrichtung (2) verbundenen Auslöseeinrichtung (4) betätigbar ist und den zwischen Neutralleiter (N) und Anlagenerde (PE) liegenden zweiten Ableiter (5) überbrückt und/oder die mit den Überstromschutzeinrichtungen (7) verbundenen Anschlüsse (9) des bzw. der ersten Ableiter (6) gegen den Neutralleiter (N) oder gegen die Anlagenerde (PE) kurzschließt und dadurch die zwischen dem bzw. den Phasenleitern (L bzw. L1, L2, L3) und den ersten Ableitern (6) geschalteten Überstromschutzeinrichtungen (7), vorzugsweise Schmelzsicherungen ansprechen.

Fig. 1.1

**Beschreibung**

Die Erfindung betrifft eine Schutzschaltungsanordnung für eine in ein Spannungsversorgungsnetz geschaltete Überspannungsableiter-Anordnung, die zwischen dem bzw. den Phasenleitern und dem Neutralleiter oder der Anlagenerde geschaltete erste Ableiter und einen zwischen Neutralleiter und Anlagenerde geschalteten zweiten Ableiter aufweist, umfassend eine zumindest den Ableitstrom durch den zweiten Ableiter erfassende Detektionseinrichtung und eine von der Detektionseinrichtung auslösbare Schalteinrichtung. Derartige Schutzschaltungsanordnungen sind in vielfacher Ausgestaltung bekannt, beispielsweise kann hier der in der österr. Patentanmeldung Nr. A205/91 beschriebene Ableitertrennschalter angeführt werden.

Sämtliche der bisher bekannten Schutzschaltungsanordnungen sehen als Abschalteinrichtung einen Schaltkontakt vor, der in Serie zum zu schützenden Überspannungsableiter geschaltet ist und geöffnet wird, wenn ein unzulässiger netzfrequenter Strom den Ableiter durchfließt. Ein solcher unzulässiger und daher von der Schutzschaltungsanordnung zu unterbrechender Ableiterstrom ergibt sich entweder wenn der betreffende Ableiter schadhaft geworden ist (z.B. nach Überlastung durch eine transiente Überspannung) oder durch die in letzter Zeit in Diskussion gekommen sog. TOVs (Temporary Over Voltages), temporäre netzfrequente Überspannungen, welche folgendermaßen entstehen: Ein zur Versorgung einer Anlage herangezogenes Niederspannungsnetz wird über einen Transformator von einem Mittelspannungsnetz versorgt. Beide Netze sind über eine gemeinsame Erdungsanlage geerdet.

Beim Auftreten eines Erdschlusses im Mittelspannungsnetz kommt es nun zu einem Stromfluß und als Folge davon zu einem Spannungsabfall über den Erdungswiderstand. Damit wird aber der Sternpunkt und damit der Neutralleiter des Niederspannungsnetzes in seinem Potential um besagten Erdungswiderstand-Spannungsabfall angehoben. In gleicher Höhe steigt auch die Potentialdifferenz Phasenleiter-Erdung im Niederspannungsnetz. In der Amplitude sind die TOVs wesentlich niedriger als transiente, beispielsweise durch Blitzschläge hervorgerufene Überspannungen, können aber ein Mehrfaches der Nennspannung Phasenleiter-Erde erreichen und bringen damit die Ableiter in ihren leitenden Zustand. Die unangenehmste Eigenschaft der TOVs in Hinblick auf Ableiterbauelemente ist deren relativ lange Einwirkungsdauer. Derartige Überspannungen können nämlich einige hundert Millisekunden lange andauern, stchen also in einem üblichen 50Hz-Netz während einiger Periodendauern an.

Damit ist aber ein lange einwirkender Ableitstrom und in weiterer Folge eine hohe thermischc Belastung der Ableiterbauteile verbunden, sodaß auch hier die Schutzschaltungsanordnung die Ableiter vom Netz trennen bzw. schützen muß. Eingangs erwähnte, durch defekte Ableiter hervorgerufene Ableiterströme können von den bisher bekannten, mit Schaltkontakten ausgestatteten Ableitertrennschalter noch zuverlässig abgetrennt werden -es herrscht nur die Nenn-Netzspannung vor-, wenn jedoch TOVs anstehen, ist zu berücksichtigen, daß diese ein Mehrfaches der Netzspannung ausmachen können, was dazu führt, daß der Abstand der Kontaktstellen im geöffneten Zustand des Kontaktes mittels Lichtbogen überbrückt wird, und daher bei derzeitigen Konstruktionen eine wirksame Unterbrechung nicht mehr sichergestellt werden kann.

Weiters sind die Kontakte aufgrund ihrer Serienschaltung zu den Ableitern von den bei transienten Überspannungen auftretenden hohen Stoßströmen durchflossen, wodurch sie eine starke Erwärmung erfahren, die bei Überlastung bis zur Verschweißung der Kontaktstellen und damit zur Unbrauchbarkeit des Ableitertrennschalters führen kann.

Es ist Aufgabe der Erfindung, eine Schutzschaltungsanordnung der eingangs erwähnten Art anzugeben, die einen zuverlässigen Schutz der Ableiter unter Berücksichtigung der Höhe der bei TOVs herrschenden Spannungsverhältnisse erlaubt.

Erfindungsgemäß wird dies dadurch erreicht, daß die Schalteinrichtung gebildet ist aus einer Kontakteinrichtung, welche von einer mit der Detektionseinrichtung verbundenen Auslöseeinrichtung betätigbar ist und den zwischen Neutralleiter und Anlagenerde liegenden zweiten Ableiter überbrückt und/oder die mit den Überstromschutzeinrichtungen verbundenen Anschlüsse des bzw. der ersten Ableiter gegen den Neutralleiter oder gegen die Anlagenerde kurzschließt und dadurch die zwischen dem bzw. den Phasenleitern und den ersten Ableitern geschalteten Überstromschutzeinrichtungen, vorzugsweise Schmelzsicherungen ansprechen.

Die Abtrennung der ersten Ableiter erfolgt damit nicht durch Kontaktöffnung sondern durch Auslösen einer Überstromschutzeinrichtung, vorzugweise durch Abschmelzen einer entsprechenden Sicherung, was durch das besonders rasch durchführbare Kurzschließen der Phasen mit dem Neutralleiter oder der Anlagenerde hervorgerufen wird.

Bei solchen Sicherungen ist -verglichen mit Kontakten- auf wesentlich einfachere Weise ein großer "Kontaktabstand" realisierbar, sodaß das Ausbilden eines stehenden Lichtbogens und damit die Verzögerung bzw. Verhinderung der Abschaltung zuverlässig und mit wendiger Aufwand unterbunden werden kann. Desweiteren sind die Kontakte nicht von transienten Ableitströmen durchflossen, sodaß auch die damit verbundenen Probleme nicht auftreten können.

In Weiterbildung der Erfindung kann vorgesehen sein daß die Detektionseinrichtung über eine Auswertschaltung, wie z.B. eine Verzögerungsschaltung, Energiespeicherschaltung od. dgl. mit der Auslöseeinrichtung verbunden ist.

Neben der Umformung des von der Detektionseinrichtung kommenden in ein für die Ansteuerung der Auslöseeinrichtung notwendiges Signal kann das Ansprechverhalten der Schutzschaltungsanordnung, wie z.B. Ansprechverzögerung od. dgl. in dieser Auswertschaltung eingestellt werden.

Nach einer bevorzugten Ausführungsform der Erfindung kann vorgesehen sein, daß die Auswertschaltung zumindest die vom zweiten Ableiter aufgenommene elektrische Energie erfaßt und beim Erreichen einer vorgebbaren Energiemenge, die kleiner oder gleich dem maximalen Energieaufnahmevermögen des zweiten Ableiters ist, die Auslöseeinrichtung betätigt.

Damit wird vor oder bei Erreichen der maximal zulässigen Erwärmung des Ableiters die Energie- und damit die Wärmezufuhr gestoppt, sodaß daraus resultierende Beschädigungen bzw. Zerstörungen vermieden werden können. Bei geringen bzw. nur sehr kurzzeitig einwirkenden und damit für die Ableiter ungefährlichen Strömen kann eine Abschaltung unterdrückt werden.

In diesem Zusammenhang kann in Weiterbildung der Erfindung vorgesehen sein, daß die Auswertschaltung durch eine Serienschaltung aus einer das Signal der Detektionseinrichtung über die Zeit integrierenden ersten Schaltung und einer Schwellwert-Erkennungsschaltung gebildet ist.

Diese Ausgestaltungsmöglichkeit kann bei Ableiterbauteilen, bei welchen die an ihnen abfallende Spannung im niederohmigen Zustand annähernd konstant und bekannt ist, angewandt werden. Eine Einrichtung zur Detektion besagter Spannung kann eingespart werden, was die Gesamtheit der Energieerfassungs-Einrichtung wesentlich vereinfacht. Weiters kann vorgesehen sein, daß zumindest eine weitere, den Ableitstrom durch den bzw. die ersten Ableiter erfassende Detektionseinrichtung und eine damit verbundene weitere, die von dem bzw. den Ableiter(n) aufgenommene elektrische Energie erfassende Auswertschaltung vorgesehen ist, welche Auswertschaltung beim Erreichen einer vorgebbaren Energiemenge, die kleiner oder gleich dem maximalen Energieaufnahmevermögen des bzw. der ersten Ableiter ist, eine weitere Auslöseeinrichtung bzw. die Auslöseeinrichtung betätigt, welche den bzw. die ersten Ableiter mittels einer weiteren Kontaktanordnung bzw. mittels zusätzlicher Kontakte der Kontaktanordnung kurzschließt.

Dadurch ergibt sich ein zuverlässiger, weil von einem Ableitstrom durch den zweiten Ableiter unabhängiger Schutz der ersten Ableiter.

Ein weiteres Merkmal der Erfindung kann sein, daß die Detektionseinrichtungen durch Stromwandler. Summenstromwandler od. dgl. gebildet sind.

Damit kann ein galvanisch vom Ableiterstrom getrenntes, in seiner Amplitude wesentlich kleineres und damit mit geringem Aufwand weiterverarbeitbares Signal erzeugt werden. Nach eine bevorzugten Ausführungsform der Erfindung kann vorgesehen sein, daß die Auslöseeinrichtungen durch die Erregerwicklung eines Relais oder Schaltschützes und die Kontakteinrichtungen durch die Kontakte desselben Relais bzw. Schaltschützes gebildet sind. Damit ist eine besonders kompakte und funktionszuverlässige Ausführung von Auslöseeinrichtung und Kontakteinrichtung gegeben.

In weiterer Ausgestaltung der Erfindung kann vorgesehen sein, daß eine Anzeige, wie z.B. eine optische, akustische od. dgl. vorgesehen ist, die beim Schließen der Kontakteinrichtung gesetzt wird.

Dadurch kann die Notwendigkeit der Wiederinbetriebnahme des betroffenen Stromkreises auf einfache Weise dem dafür zuständigen, sich aber nicht vor Ort befindlichen Personal mitgeteilt werden.

Weiters kann vorgesehen sein, daß die Auslöseeinrichtungen nach Abklingen oder Unterbrechung des Ableitstromes selbsttätig die Kontakteinrichtungen wieder öffnen.

Damit beschränkt sich die Wiederinbetriebnahme der Schutzschaltungsanordnung auf den Austausch bzw. das Einschalten der Überstromschutzeinrichtung (en).

In diesem Zusammenhang kann es jedoch vorteilhaft sein, daß die Anzeige nach Öffnung der Kontakteinrichtungen gesetzt bleibt, damit die Information über die Notwendigkeit des händisch durchzuführenden Austausches der Überstromschutzeinrichtung(en) nicht verloren geht.

Die Erfindung wird nachstehend unter Bezugnahme auf die in den beigeschlossenen Zeichnungen dargestellten bevorzugten Ausführungsformen näher erläutert. Dabei zeigen:

Fig. 1.1 bis 1.3 Schaltpläne erfindungsgemäßer, in einphasigen Verbraucheranlagen angeordneter Schutzschaltungsanordnungen;

Fig.2.1 bis 2.3 Schaltpläne erfindungsgemäßer, in dreiphasigen Verbraucheranlagen angeordneter Schutzschaltungsanordnungen;

Fig.3 den Schaltplan der Schutzschaltungsanordnung nach Fig.1.1 mit einer im Detail dargestellten Ausführungsform der Auswertschaltung und der Auslöseeinrichtung;

Fig.4.1 und 4.2 Prinzipschaltbilder einer erfindungsgemäßen Schutzschaltungsanordnung, deren Auswertschaltung die vom zweiten Ableiter aufgenommene elektrische Energie erfaßt;

Fig.5 das maximale Energieabsorptionsvermögen eines Varistors in Form eines Strom/Zeit-Diagrammes:

Fig.6.1 bis 6.4 verschiedene Ausführungsformen der die Energieaufnahme des Ableiters erfassenden Schaltung;

Fig.7.1 und 7.2 Schaltpläne einphasiger Schutzschaltungsanordnungen nach Fig.1.2, bei welchen auch die Energieaufnahme der ersten Ableiter 6 überwacht wird und

Fig.8.1 bis 8.5 Schaltpläne dreiphasiger Schutzschaltungsanordnungen nach Fig.2.3, bei welchen auch die Energieaufnahme der ersten Ableiter 6 überwacht wird.

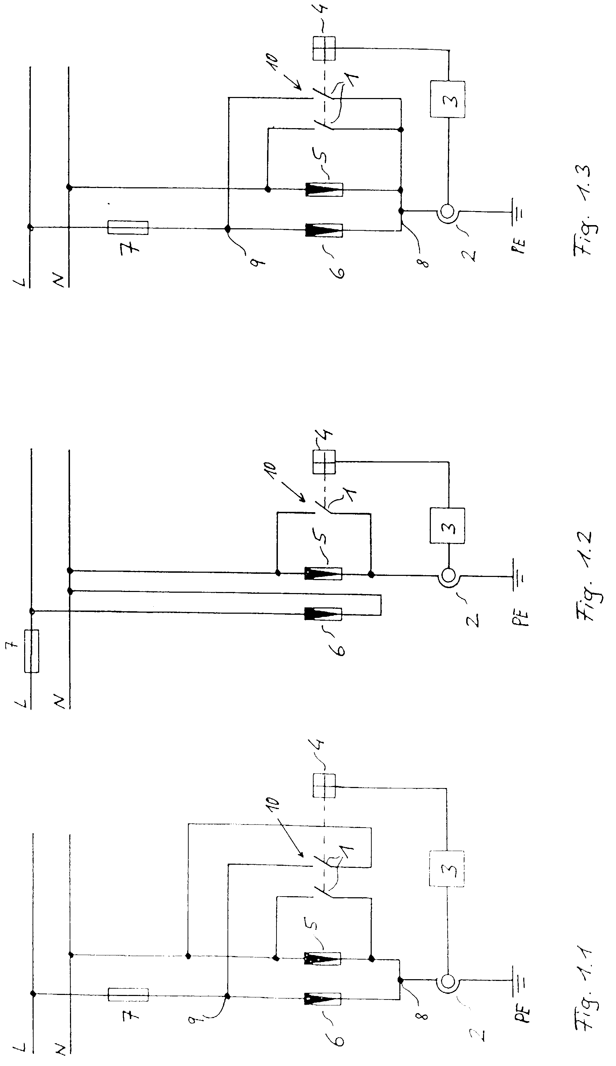

Im Ausführungsbeispiel nach Fig. 1.1 ist eine Überspannungsableiter-Anordnung vorgesehen. die sowohl zwischen dem Phasenleiter L und der Anlagenerde PE einen Ableiter 6 als auch zwischen dem Neutralleiter N und der Anlagenerde PE einen Ableiter 5 aufweist. Diese Ableiter 5,6 sind hier wie auch in allen nachfolgenden Ausführungsbeispielen vorzugsweise durch Varistoren gebildet, könnten aber auch andere spannungsabhängige Bauteile sein. Die Schaltunganordnung, die zum Schutz dieser Ableiter 5,6 vorgesehen ist, umfaßt eine Detektionseinrichtung 2, die einerseits mit dem Zusammenschaltungspunkt 8 der beiden Ableiter 5,6 und andererseits mit der Anlagenerde PE verbunden ist. Diese Detektioneinrichtung 2 liegt damit in Serie zu den beiden Ableitern 5.6 und dient zur Erfassung des sie durchfließenden Summen- oder Ableitstromes. Weiterer Bestandteil der Schutzschaltungsanordnung ist eine Schalteinrichtung, die die Abtrennung der Ableiteranordnung vom Netz bzw. eine Überbrückung eines zwischen Neutralleiter N und Anlagenerde PE geschalteten Ableiters 5 bewirkt und von der erwähnten Detektionseinrichtung 2 ausgelöst werden kann.

Diese Schutzschaltungsanordnung hat zwei wesentliche Komponenten, nämlich eine Überstromschutzeinrichtung 7, die zwischen den Phasenleiter L und den ersten Ableiter 6 geschaltet ist und eine Auslöseeinrichtung 4, die mit der Ableitstrom-Detektionseinrichtung 2 verbunden ist und eine Kontakteinrichtung 10 betätigt.

Wenn die Detektionseinrichtung 2 einen unzulässig hohen Strom durch die Ableiter 5,6 erfaßt, gibt sie ein dementsprechendes Signal an die Auslöseeinrichtung 4, die in weiterer Folge das Schließen der Kontakteinrichtung 10 durchführt. Dabei wird, wie deutlich den Zeichnungen zu entnehmen ist, der zwischen Neutralleiter N und Anlagenerde PE liegende zweite Ableiter 5 überbrückt und der mit den Überstromschutzeinrichtungen 7 verbundene Anschluß 9 des ersten Ableiters 6 gegen den Neutralleiter N kurzgeschlossen. Der auf diese Weise zwischen Phasenleiter L und Neutralleiter N entstehende satte Kurzschluß bewirkt einen entsprechend hohen Strom über die Überstromschutzeinrichtung 7. wodurch diese auslöst und so den Ableiter 6 vom Netz abtrennt. Der zweite Ableiter 5 wird dadurch vor unzulässig hohen Spannungen geschützt, daß seine beiden Anschlüsse niederohmig miteinander verbunden sind, wodurch keine nennenswerten Spannungen zwischen diesen Anschlüssen entstehen können.

Die Überspannungsableiter-Anordnung nach Fig. 1.2 sieht vor, den ersten Ableiter 6 zwischen Phasenleiter L und Neutralleiter N und den zweiten Ableiter 5 so wie in Fig.1.1 zwischen Neutralleiter N und Anlagenerde PE zu schalten. Die Schalteinrichtung umfaßt auch hier eine Ableitstrom-Detektionseinrichtung 2, die in Verbindung mit einer die Kontakteinrichtung 10 betätigenden Auslöseeinrichtung 4 steht.

Wie eingangs bereits erläutert, entstehen TOVs dadurch, daß zunächst der mit der Transformatorerdung verbundene Neutralleiter N der Niederspannungsanlage in seinem Potential angehoben wird, gleichzeitig erhöhen sich auch die Spannungen des bzw. der Phasenleiter L bzw. L1, L2, L3 gegen die Anlagenerde PE. Daraus ergibt sich, daß es ausreicht, den Strom durch den zwischen Neutralleiter N und der Anlagenerde PE angeordneten Ableiter 5 zu überwachen. um einen Ableitstrom zu erkennen. Dieses Prinzip liegt der Ausführungsform nach Fig. 1.2 zugrunde, die Detektionseinrichtung 2 erfaßt nur den Strom durch den Ableiter 5. Die Kontakteinrichtung 10 weist lediglich einen Kontakt 1 auf, welcher den Ableiter 5 überbrückt. Der Ableiter 5 ist analog zu Fig.1.1 wieder durch die niederohmige Verbindung seiner beiden Anschlüsse vor unzulässig hohen Spannungen geschützt.

Wie in dieser Fig. 1.2 dargestellt, kann die Überstromschutzeinrichtung 7 aus dem Stromkreis des ersten Ableiters 6 herausgenommen und der gesamten Anlage vorgeschaltet werden. Beim Ansprechen der Schutzschaltungsanordnung werden damit nicht nur lediglich die Ableiter 5.6 sondern die gesamte Verbraucheranlage vom Netz getrennt. Die Überstromschutzeinrichtung 7 kann bei einer solchen Anordnung durch die ohnehin vorhandene Hausanschlußsicherung gebildet sein. Diese Art der Anordnung der Überstromschutzeinrichtung 7 kann bei jeder der nachstehend beschriebenen Ausführungsformen vorgesehen sein.

Die Ausführungsform nach Fig.1.3 ist ähnlich derjenigen nach Fig.1.1 aufgebaut. Die Kontakteinrichtung 10 weist wieder zwei Kontakte 1 auf, von denen einer die schon erläuterte Überbrückung des Ableiters 5 bewirkt, der andere nun aber im Gegensatz zu Fig.1.1 eine Verbindung des mit der Überstromschutzeinrichtung 7 verbundenen Anschlusses der ersten Ableiters 6 mit der Anlagenerde PE herstellt. Dies verändert jedoch das grundlegende Funktionsprinzip nicht, es wird wieder ein hoher, die Überstromschutzeinrichtung 7 auslösender Strom hervorgerufen, wodurch eine Abtrennung des Ableiters 6 vom Netz bewirkt wird.

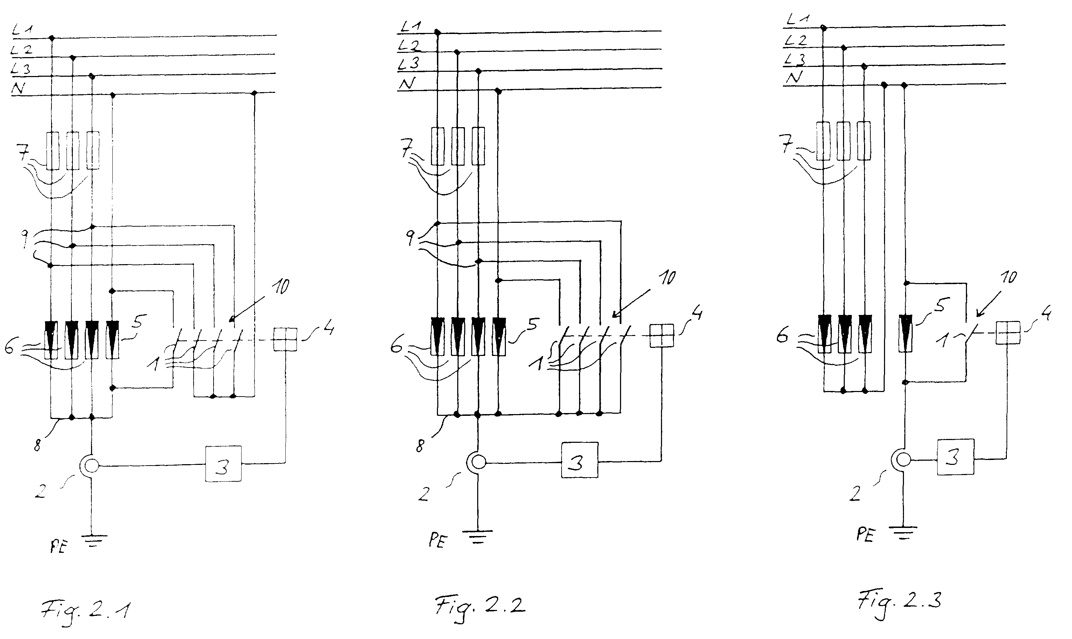

In den Fig.2.1 bis 2.3 sind für dreiphasige Verbraucheranlagen geeignete Ausführungsformen der Erfindung angegeben. Diese entsprechen in ihrem Aufbau den einphasigen Ausführungsformen nach Fig.1.1 bis 1.3; konkret zeigt Fig.2.1 das Pendant zu Fig.1.1 (Phasenleiter L1,L2,L3 werden mit dem Neutralleiter N kurzgeschlossen), Fig.2.2 das Äquivalent zu Fig. 1.3 (Phasenleiter L1,L2,L3 werden mit der Anlagenerde PE kurzgeschlossen) und Fig.2.3 die Ausführungsform nach Fig.1.2 (Ableiter 6 zwischen Phasenleiter L1,L2,L3 und Neutralleiter N, überwacht wird nur der Strom durch den Ableiter 5). Aufgrund der identischen Funktionsweise der einphasigen und der dreiphasigen Schaltungsanordnungen wird auf eine nochmalige detaillierte Funktionsbeschreibung verzichtet.

Für die Realisierung der Auslöseeinrichtung 4 sind zwei grundsätzliche Wege vorstellbar: Die Auslöseeinrichtung 4 kann lediglich die Ausschalthandlung setzen, das Rücksetzen, also das Öffnen der Kontakteinrichtung 10 muß hingegen händisch erfolgen. Als Auslöseeinrichtung 4 kann daher eine im Zusammenhang mit Leitungs- oder FI-Schutzschaltern bereits bekannte Auslöseeinrichtung verwendet werden. Nach der zweiten Variante kehrt die Auslöseeinrichtung 4 nach dem Auslösen der Überstromschutzeinrichtung 7 bzw. nach Abklingen oder Unterbrechung des Ableitstromes selbsttätig in seine Ruhelage zurück; ein Beispiel hiefür wird weiter untenstehend noch beschrieben.

Die Kontakte 1 der Kontakteinrichtung 10 sind vorzugsweise durch an sich bekannte, mechanische Kontakte gebildet, können aber auch durch elektronische Bauteile, wie z.B. Triac realisiert sein.

Die Detektionseinrichtung 2 kann prinzipiell durch jede stromempfindliche Sensoreinrichtung gebildet sein, als besonders gut geeignet können Stromwandler oder Summenstromwandler angegeben werden.

Im allgemeinen wird das von der Detektionseinrichtung 2 kommende Signal nicht zur direkten Ansteuerung der Auslöseeinrichtung 4 geeignet sein. Deshalb ist in sämtlichen dargestellten Ausführungsformen der Erfindung vorgesehen, die Detektionseinrichtung 2 über eine Auswertschaltung 3 mit der Auslöseeinrichtung 4 zu verbinden. In dieser Auswertschaltung 3 kann das von der Detektionseinrichtung 2 kommende Signal in entsprechender Weise in ein für die Auslöseeinrichtung 4 geeignetes Signal umgewandelt werden.

Daneben kann mit dieser Auswertschaltung 3 auch das Auslöseverhalten der gesamten schutzschaltungsanordnung beeinflußt werden. Mittels Verzögerungsehaltungen oder Energiespeicherschaltungen, die beispielsweise so realisiert sein können, daß das Signal der Detektionseinrichtung 2 einen Kondensator aufladen muß, bevor ein Signal an die Auslöseeinrichtung 4 weitergeleitet wird, kann eine Auslösung bei transienten, ungehindert von den Ableitern 5,6 abzuleitenden Überspannungen verhindert werden. Desweiteren könnten Frequenzfilter vorgesehen sein, die alle von nicht-netzfrequenten -und damit von transienten, also abzuleitenden- Überspannungen erzeugten Signale verwerfen und damit ebenfalls eine Auslösung verhindern.

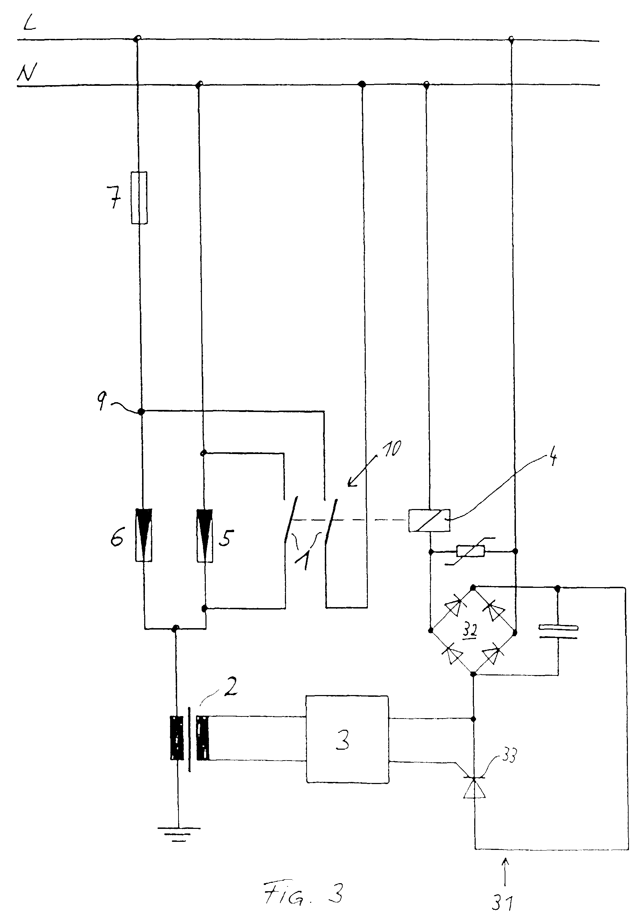

In Fig.3 ist ein konkretes, besonders einfaches Ausführungsbeispiel für Auslöseeinrichtung 4 und Kontakteinrichtung 10 dargestellt. Diese beiden Komponenten werden durch ein einziges Bauteil, nämlich durch ein Relais oder Schaltschütz, dessen Erregerwicklung die Auslöseeinrichtung 4 und deren Kontakte die Kontakteinrichtung 10 bilden, realisiert. Die Anspeisung dieses Relais erfolgt durch die Netzspannung, wobei der Phasenleiter L über einen von der Detektionseinrichtung 2 betätigbaren elektronischen Schalter 31 geführt ist. Dieser Schalter 31 weist eine Gleichrichterbrücke 32 auf, deren Wechselspannungsanschlüsse mit dem Phasenleiter L und mit dem Relais verbunden sind. Im Gleichstromkreis ist ein Thyristor 33 vorgesehen, der von der Auswertschaltung 3 gezündet wird. Damit wird ein Stromfluß durch die Erregerwicklung des Relais möglich und die Auslösung wird eingeleitet. Wird hier ein monostabiles Relais oder Schütz, also ein solches, dessen Anker im spannungsfreien Zustand durch Federkraft in seine Ruhelage gebracht wird, verwendet, ist nach Abklingen der Überspannung eine automatische Rückstellung der Auslöseeinrichtung 4 gegeben.

Die Detektionseinrichtung 2 ist hier indirekt über eine in bereits erläuterter Weise zur Signalanpassung bzw. zur Erzeugung eines bestimmten Auslöseverhaltens dienenden, lediglich symbolisch dargestellten Auswertschaltung 3 verbunden.

Neben den bisher beschriebenen, für die Funktion unerläßlichen Bestandteilen kann die Schutzschaltungsanordnung weiters eine Anzeige aufweisen, mit deren Hilfe eine erfolgte Auslösung angezeigt werden kann. Die Anzeige kann beliebiger Natur, also beispielsweise optisch -Lampe, verschiebbares Signalplättchen od. dgl.- oder akustisch z.B. Sirenenton sein. Sie wird beim Schließen der Kontakteinrichtung 10 -z.B. mittels eines Hilfskontaktes dieser Kontaktanordnung gesetzt- und bringt damit dem Wartungspersonal der Anlage die Notwendigkeit des Austausches bzw. der Wiedereinschaltung der Überstromschutzeinrichtung 7 und der Auslöseeinrichtung 4 zur Kenntnis. Wird eine Auslöseeinrichtung 4 mit selbsttätiger Rückstellung verwendet, bleibt die Anzeige vorzugsweise von dieser Rückstellung unbeeinflußt. also weiterhin gesetzt, weil nach wie vor die Überspannungsschutzeinrichtung 7 wieder in Betrieb genommen werden muß. Ist diese Inbetriebnahme erfolgt. kann die Anzeige gelöscht werden, was wieder selbsttätig oder händisch erfolgen kann.

Ein Ableiter nimmt beim Auftreten eines Ableitstromes elektrische Encrgie auf und setzt diese in Wärme um. Erst wenn diese thermische Belastung das maximale Energieabsorptionsvermögen des Ableiter übersteigt, kommt es zur Zerstörung bzw. zu Beschädigungen des Ableiters.

Bisher wurde stets davon gesprochen, daß eine Abtrennung bzw. Überbrückung der Ableiter 5,6 dann erfolgen soll, wenn sie von einem "unzulässig hohen" Strom durchflossen sind. Ausgehend von obiger Überlegung hinsichtlich des maximalen Energieaufnahmevermögens eines Ableiters ist es nicht notwendig, sofort wenn ein unzulässig hoher Ableitstrom erkannt wird, eine Abtrennung bzw. Überbrückung der Ableiter zu veranlassen, vielmehr wäre es zweckmäßiger, die Energieaufnahme des Ableiters zu beobachten und eine Abtrennung bzw. Überbrückung erst bei oder kurz vor Erreichen des maximalen Energieaufnahrnevermögens einzuleiten.

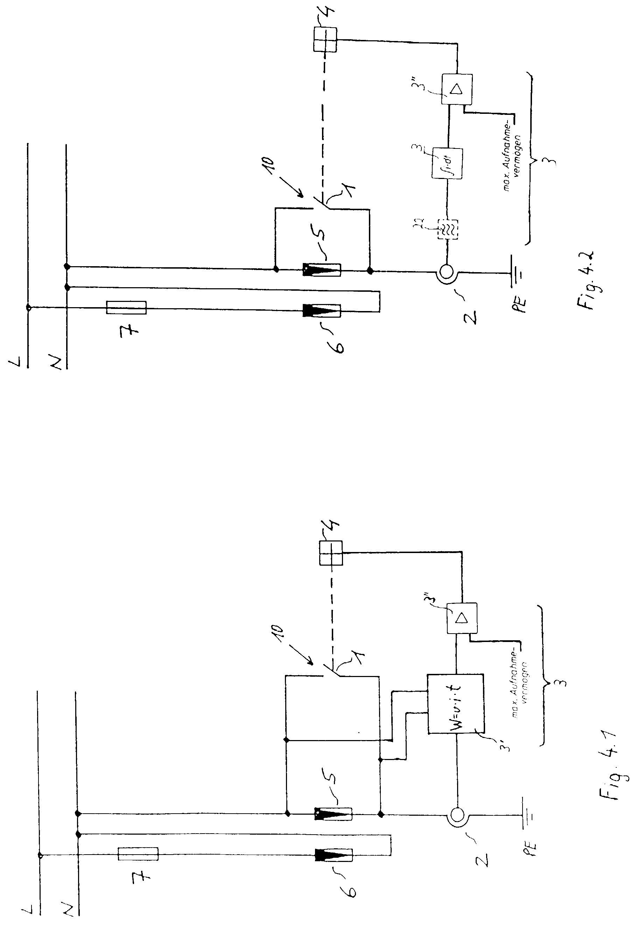

Ausführungsformen der Erfindung, bei denen dieses Abschaltkriterium eingehalten wird, sind in den Fig. 4, 7 und 8 dargestellt und werden nachstehend näher beschrieben. Die einem resistiven Bauelement zugeführte Energie kann gemäß der Formel

$$W = u \cdot i \cdot t$$

berechnet werden. Demgemäß ist im Prinzipschaltbild der Fig.4.1 -welche hinsichtlich des strukturellen Aufbaus der oben schon erläuterten Fig. 1.2 entspricht- eine Einrichtung 3' vorgesehen, welche die am Ableiter 5 anliegende Spannung sowie den Strom durch den Ableiter 5 über die Detektionseinrichtung 2 erfaßt und obige Berechnung durchführt.

Sobald die errechnete Energiemenge einen vorgebbaren -eben das Maximalaufnahmevermögen bzw. einen knapp unterhalb des maximalen Aufnahmevermögens liegenden Wert erreicht, was mithilfe einer Schwellwert-Erkennungsschaltung 3" feststellbar ist, wird die Auslöseeinrichtung 4 betätigt und dadurch der Ableiter 5 in der schon beschriebenen Weise überbrückt.

Wenn es sich bei dem zu schützenden Ableiter 5 um einen Varistor handelt, was in der Praxis sehr häufig der Fall ist, so kann eine Vereinfachung dieses Prinzipschaltbildes Fig.4.1 vorgenommen werden. Ein Varistor hat nämlich in seinem niederohmigen Zustand die Eigenschaft, daß die an ihm abfallende Spannung einen konstanten, nahezu vom Strom unabhängigen, bekannten Wert aufweist.

Die zugeführte Energie ist damit nur mehr einer Unbekannten, dem Produkt $i \cdot t$, also dem Integral des Stromes über die Zeit proportional. Für die Durchführung der oben erläuterten Berechnung braucht daher nur mehr dieses Produkt $i \cdot t$ erfaßt werden.

Wie in Fig.4.2 dargestellt, braucht eine die Energieaufnahme erfassende Auswertschaltung 3 für Varistoren demzufolge nur noch aufweisen:

eine Schaltung 3, die das von der Detektionseinrichtung 2 kommende, dem Ableitstrom proportionale Signal über die Zeit integriert und eine Schwellwert-Erkennungsschaltung 3" -symbolisiert durch einen Komparator-, die die Auslöseeinrichtung 4 betätigen kann, was sie spätestens dann macht. wenn die dem Ableiter 1 zugeführte Energie das maximale Absorptionsvermögen erreicht.

Die strichliert eingetragene Filterschaltung 22 ist, wie später noch erläutert werden wird, nur optional vorhanden und sei vorläufig noch nicht eingebaut.

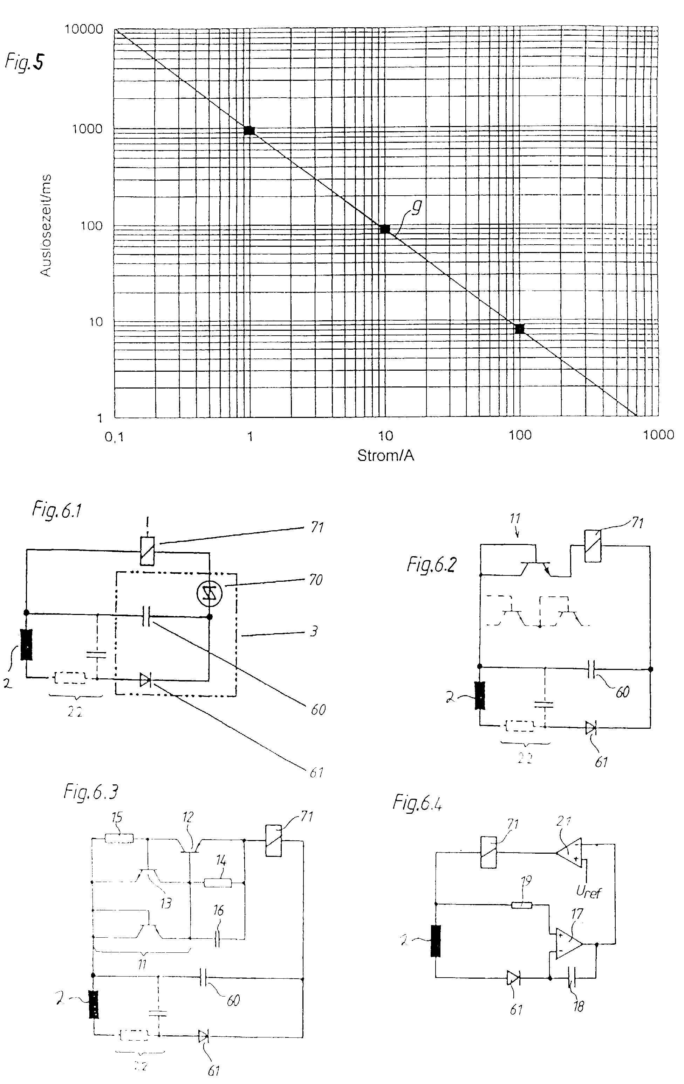

Besonders einfach läßt sich die erläuterte Abschaltbedingung graphisch darstellen, so wie dies in Fig.5 durchgeführt wurde. Ausgangspunkt für dieses Diagramm ist die Gleichung für das maximale Energieabsorptionsvermögen eines Varistors:

$$W_{max} = u \cdot i \cdot t, \text{ mit } u=const => W_{max} \text{ prop. } i \cdot t$$

Die eingetragene Gerade g ist die Menge aller Punkte, in denen das Produkt $i \cdot t$ einen konstanten Wert aufweist, der multipliziert mit der konstanten Spannung das maximale Energieabsorptionsvermögen eines Varistors ergibt.

Es ist nun vorgesehen, daß die Abschaltkennlinie der erfindungsgemäßen Schutzschaltungsanordnung -egal wie deren genauer Verlauf aussieht- mit allen ihren Punkten unterhalb der Geraden g liegt. Damit kann dem zu schützenden Ableiter 5 niemals eine zu hohe, ihn beschädigende Energiemenge zugeführt werden.

Konkrete Ausführungsformen für die Integrierschaltung 3 sind in den Fig.6.1-6.4 angegeben. Die für die Integrierfunktion eingesetzten Bauteile sind entsprechend der Form des von der Detektionseinrichtung 2 gelieferten Signales auszuwählen. Im Fall der Fig.6.1 ist die Detektionseinrichtung 2 als Stromwandler ausgeführt, sodaß das ableiterstromproportionale Signal wieder ein Strom ist. Nach seiner Gleichrichtung durch die Diode 61 kann dieses Signal einfach mittels eines Kondensators 60 über die Zeit aufintegriert werden: $U_c=1/C \cdot \int i \, dt$. Das Ergebnis des Integrals liegt also in Form der momentanen Kondensatorspannung vor. Bei Verwendung eines spannungsliefernden Stromsensors ist selbstredend eine Schaltung, die Spannungswerte aufintegrieren kann, zu verwenden; einfachstes Beispiel hiefür ist ein als Integrator beschalteter Operationsverstärker, vgl. Fig.6.1.

Die Kondensatorspannung wird über eine Z-Diode 70 an ein Auslöserelais 71 geführt. welches Auslöserelais 71 mit der Auslöseeinrichtung 4 in Wirkverbindung steht. Wenn die Auslöseeinrichtung 4 in der oben beschriebenen Weise durch die Erregerwicklung eines Relais oder Schaltschützes gebildet ist, kann diese Erregerwicklung anstelle des Auslöserelais 71 in den Schaltkreis eingesetzt werden. Sobald die Kondensatorspannung den Wert der Durchbruchspannung der Z-Diode 70 überschreitet, entlädt sich der Kondensator 60 über das Auslöserelais 71 und leitet damit die Abtrennung bzw. Überbrückung der Ableiter 5,6 ein. Die Kapazität des Kondensators 60 und die Durchbruchsspannung der Z-Diode 70 werden dabei so dimensioniert, daß die Abschaltung vor Erreichen des maximalen Energieaufnahmevermögens des Ableiters erfolgt.

Die bisher beschriebene Schwellwerterkennung durch eine Z-Diode 70 kann im Sinne der Erfindung auch durch andere Maßnahmen erfolgen. so wie dies in den Fig.6.2-6.4d dargestellt ist.

In Fig.6.2 ist die Z-Diode durch eine in Sperrichtung betriebene Transistorstruktur 11 ersetzt. die im einfachsten Fall aus einem einzigen Transistor besteht. Die Basis-Emitter-Strecke dieses Transistors ist in Sperrichtung in Serie zum Auslöserelais 71 geschaltet, bricht -ähnlich einer Z-Diode- bei einer genau definierten Spannung durch und ermöglicht damit einen Stromfluß durch das Auslöserelais 71. Durch Serienschaltung mehrerer -strichliert eingetragener- Transistoren kann die Durchbruchsspannung dcr Transistorstruktur 11 auf einfache Weise erhöht werden.

Im Normalfall können über die Basis-Emitterstrecke eines Transistors nur kleine Ströme, die in der Regel zu gering sind, um ein Ansprechen des Auslöserelais 71 zu bewirken, geleitet werden. Es ist daher notwendig, die Transistorstruktur 11 mit weiteren, leistungsfähigeren Schaltbauelementen zu erweitern; einc Möglichkeit hiefür ist in Fig.6.3 dargestellt.

Die Transistorstruktur 11 ist mit Transistoren 12 und 13 sowie den Widerständen 14 und 15 beschaltet. Ein Kondensator 16 kann vorteilhaft sein, um Störsignale kurzzuschließen. Die Transistoren 12 und 13 sind in einer Mitkoppelschaltung angeordnet. Die Widerstände 14 und 15 sorgen für ein hochohmiges Anschließen der Transistorstruktur 11, wodurch sich diese nicht als Bürde für den Kondensator 60 während dessen Aufladung auswirkt. Die Transistoren 14, 15 sind vorteilhaft mit hoher Stromverstärkung zu wählen. Wenn die Transistorstruktur 11 in ihrer Sperrichtung leitend wird, sorgt der Spannungsabfall am Widerstand 14 dafür, daß der Transistor 12 in den leitenden Zustand gesteuert wird. Der dann über den Widerstand 15 fließende Strom führt zu einem Spannungsabfall, der den Transistor 13 leitend steuert. Über den Widerstand 14 wird dann ein noch größerer Strom gezogen, da der Spannungsabfall am Transistor 13 im leitenden Zustand wesentlich niedriger ist.

Der das Auslöserelais 71 betätigende Strom fließt also zusammenfassend nahezu vollständig über die leitenden Emitter-Kollektor-Strecken der Transistoren 12, 13 und kann daher ohne Beschädigungen hervorzurufen die für die Auslöserelais-Betätigung notwendigen Amplituden annehmen.

Nach einer weiteren, in Fig.6.4 dargestellten Ausführungsform ist die Schwellwerterkennung durch einen als Komparator beschalteten Operationsverstärker 21 gebildet. Das Integrieren des dem Ableiterstrom proportionalen Signales erfolgt durch einen weiteren Operationsverstärker 17, der durch an sich bekannte Beschaltung mit einem Widerstand 19 und einem Kondensator 18 als Integrator betrieben ist.

Die in den Fig.6.1-6.4 gezeigten Schwellwerterkennungs-bzw. Integrier-Schaltungen können in beliebigen Kombinationen eingesetzt werden: Beispielsweise kann der Kondensator 60 in Fig.6.1-6.3 durch den Operationsverstärker 17 nach Fig.6.4 ersetzt werden; umgekehrt ist auch ein Ersatz des als Komparator wirkenden Operationsverstärkers 21 durch eine Transistorstruktur 11 der Fig.6.2, 6.3 denkbar.

Beim Auftreten unzulässig hoher Überspannungen muß der Ableiter ungestört, d.h. ohne daß der Ableitertrennschalter auslöst, ableiten können. Bei einem Schalter der bislang beschriebenen Art ist dies nur dann gegeben, wenn der Energiegehalt des Überspannungsstoßes unter dem maximalen Energieaufnahmevermögen des Ableiters bleibt. Sinn eines Überspannungsableiters ist es aber, Überspannungen unabhängig von ihrem Energiegehalt, auch wenn sie die Zerstörung des Ableiters zur Folge hätten, abzuleiten. Die Stoßstromfestigkeit des Ableitertrennschalters -die in der bislang behandelten Ausführunesweise nur in Bezug auf "energiearme" Überspannungsstöße gegeben ist- ist demnach auch auf "energiereiche" Überspannungstöße auszuweiten.

Für das Erreichen dieser Vorgabe ist erfindungsgemäß vorgesehen, daß den zu schützenden Ableiter durchfließende Ströme, deren Frequenzen größer als die Netzfrequenz sind, also von kurzzeitigen Überspannungen, z.B. Blitzüberspannungen- hervorgerufen werden, bei der Berechung der dem Ableiter zugeführten elektrischen Energie unberücksichtigt bleiben. Schaltungstechnisch wird dies so realisiert, daß der Detektionseinrichtung 2 eine Filterschaltung 22 nachgeschaltet ist, welche das Ableiterstrom-proportionale Signal auf Frequenzen kleiner bzw. gleich der Netzfrequenz begrenzt. Die eingangs erwähnten TOVs haben Netzfrequenz und fließen daher vollumfänglich in die Berechung der Energieaufnahme ein, der Ableitertrennschalter spricht daher weiterhin auf sie an. Zur Erfüllung der erwähnten Unterdrückungs-Funktion muß besagte Filterschaltung 22 Tiefpaß- oder Bandpaßcharakteristik aufweisen und auf die Netzfrequenz ausgelegt sein.

In Fig. 4.2 wurde diese Filterschaltung 22 mit strichlierten Linien eingetragen. Die praktische Realisierung kann durch eine einfache passive RC-Schaltung, so wie in den Fig.6.1-6.3 dargestellt, aber auch durch jede andere bekannte Schaltung, die die geforderten Übertragungseigenschaften aufweist, erfolgen.

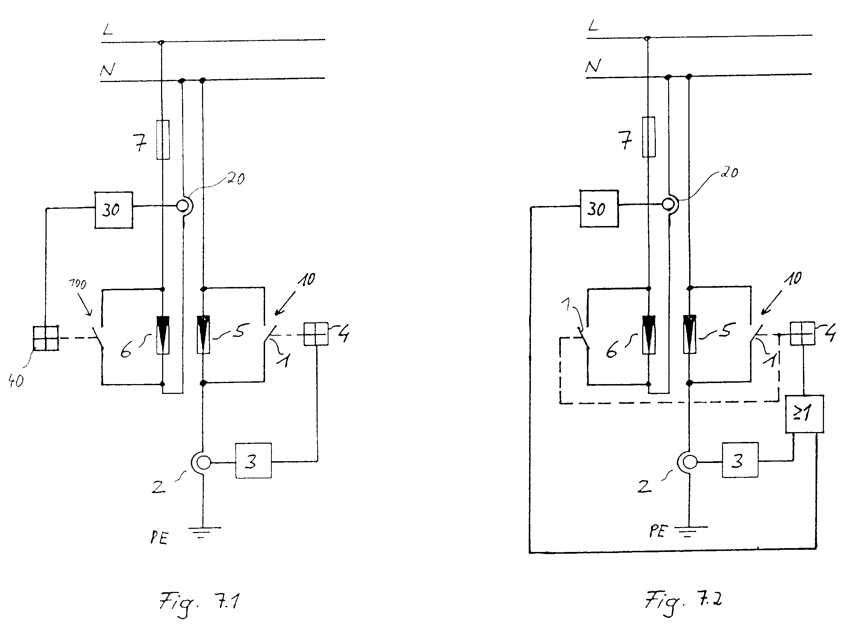

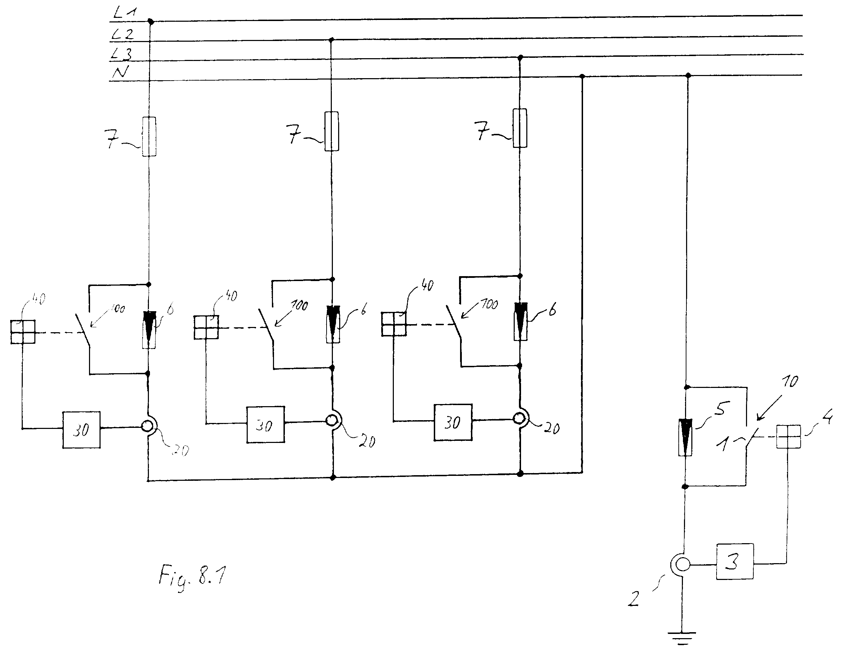

Bei der bisher beschriebenen Ausführungsform nach Fig.4.1 und 4.2 wird ausschließlich die Energieaufnahme des zweiten Ableiters 5 überwacht. Wie aus Fig.7.1 hervorgeht, liegt es aber genauso im Rahmen der Erfindung, zusätzlich auch den ersten Ableiter 6 zu überwachen. In Fig.7. ist dazu eine separate Detektionseinrichtung 20 zur Erfassung des den Ableiter 6 durchfließenden Stromes, sowie eine separate Auswertschaltung 30 und eine separate Auslöseeinrichtung 40 vorgesehen, welche eine den Ableiter 6 überbrückende Kontakteinrichtung 100 betätigt. Die beiden Ableiter 5,6 werden völlig unabhängig voneinander hinsichtlich ihrer Energieaufnahme beobachtet und vom Netz getrennt.

Eine Vereinfachung dieser Schaltung zeigt Fig.7.2. Hier werden zwar die Ströme durch die Ableiter 5,6 unabhängig voneinander erfaßt und über die Zeit integriert, die beiden hiezu notwendigen Auswertschaltungen 3, 30 wirken aber auf eine gemeinsame Auslöseeinrichtung 4 in der Weise ein, daß jede Auswertschaltung 3,30 unabhängig von der anderen die Auslöseeinrichtung 4 betätigen kann, was durch die ODER-Verknüpfung ihrer Ausgänge symbolisiert ist. Die mit der Auslöseeinrichtung 4 verbundene Kontakteinrichtung 10 weist hier zwei Kontakte 1 auf, mit denen beide Ableiter 5,6 gleichzeitig überbrückt werden.

Bei den einphasigen Ausführungsformen nach Fig. 1.1 und 1.3 ist jeweils eine gemeinsame Detektionseinrichtung 2 für die Ableiter 5,6 vorgesehen. Es wird hier die Summe der beiden Ableiterströme erfaßt und der Energieaufnahmeberechnung zugrunde gelegt. Die Abschaltung kann hier nun wahlweise dann eingeleitet werden, wenn die Summe der Energieaufnahmevermögen der beiden Ableiter 5,6 erreicht ist (wozu aber eine homogene Aufteilung des Summenstroms auf beide Ableiter vorausgesetzt wird), oder schon, wenn das maximale Aufnahmevermögen eines einzelnen Ableiters erreicht ist (wodurch auch bei inhomogener Aufteilung des Summenstroms auf die beiden Ableiter 5.6 eine Beschädigung auf jeden Fall vermieden wird).

Analoge Verhältnisse sind in den dreiphasigen Ausführungsformen nach Fig.2.1 und 2.2 gegeben, auch hier wird jeweils die Summe aller Ableiterströme erfaßt. Der Abschaltschwellwert kann dementsprechend auf einen Wert zu mischen dem einfachen und dem vierfachen Aufnahmevermögen eines Ableiters gelegt werden.

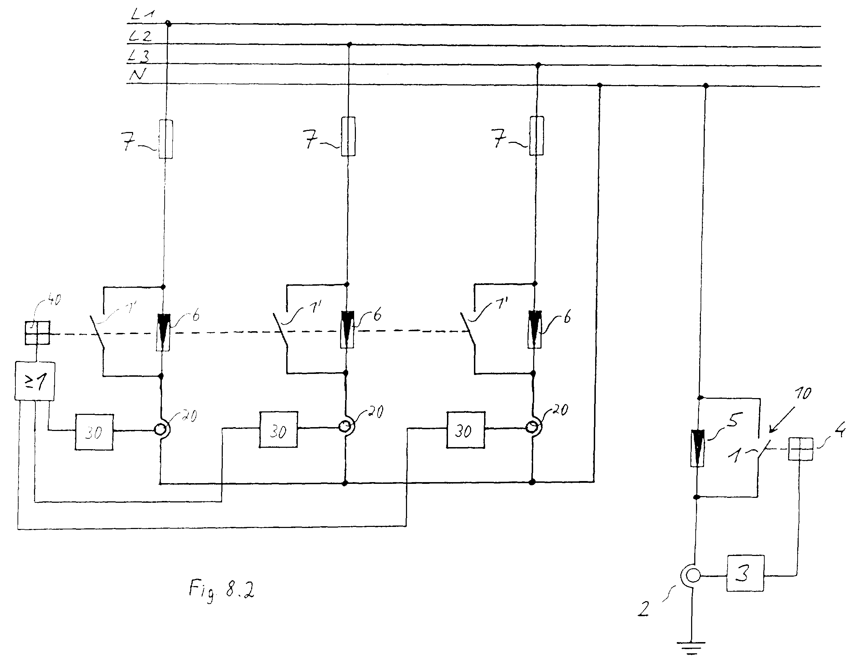

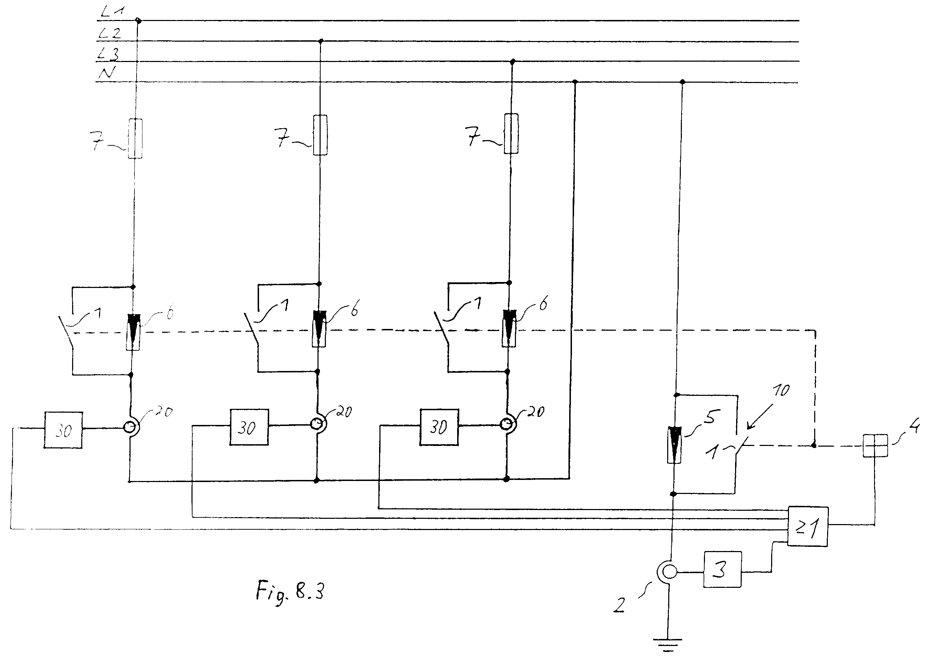

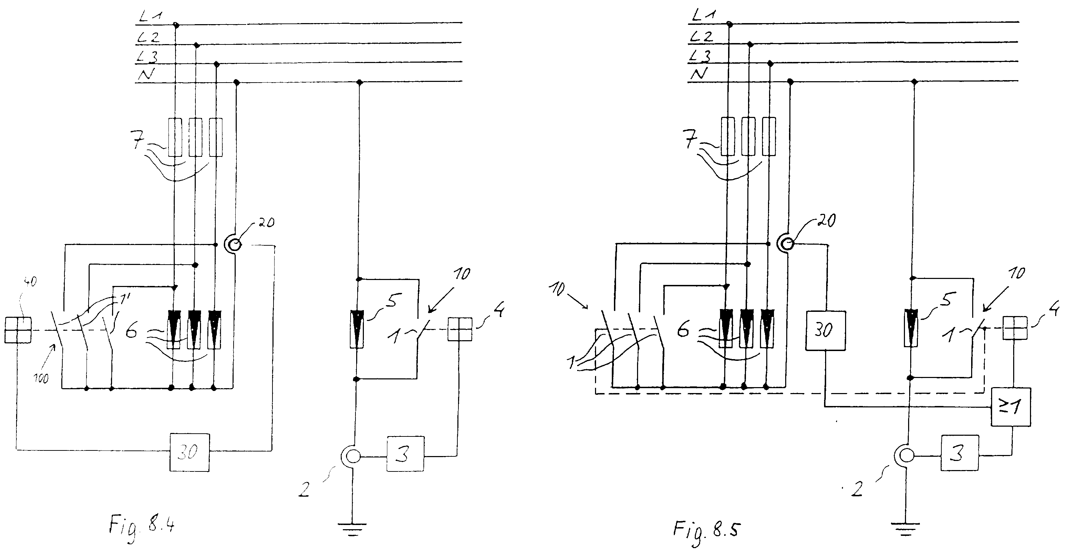

Bei einem Schaltungsaufbau entsprechend der Fig. 2.3 kann vorgesehen sein, daß lediglich das Energieaufnahmevermögen des Ableiters 5 erfaßt wird (analog zur einphasigen Ausführung nach Fig.4.2) oder daß auch die Ableiter 6 überwacht werden, wofür sich mehrere, in den Fig.8.1 bis 8.5 dargestellte Schaltungsvarianten eignen.

Gemäß Fig.8.1 ist für jeden der Ableiter 6 eine separate Detektionseinrichtung 20 mit zugehöriger Auswertschaltung 30, Auslöseeinrichtung 40 und Kontakteinrichtung 100 zur Überbrückung des jeweiligen Ableiters 6 vorgesehen.

Nach Fig.8.2 werden die einzelnen Ableiter 6 zwar jeweils für sich durch separate Detektionseinrichtungen 20 und zugehörige Auswertschaltungen 30 überwacht, die Überbrückung der ersten Ableiter 6 erfolgt aber durch eine einzige, drei mechanisch verbundene Kontakte 1' umfassende und von einer einzigen Auslöseeinrichtung 40 betätigbare Kontakteinrichtung 100. Die einzelnen Auswertschaltungen 30 können dabei die Auslöseeinrichtung 40 unabhängig voneinander betätigen.

In Fig.8.3 ist schließlich vorgesehen, für die Überbrückung der ersten Ableiter 6 und der zweiten Ableiter 5 eine gemeinsame Kontakteinrichtung 10 vorzusehen, welche mit der Auslöseeinrichtung 4, die wieder von jeder der Auswertschaltungen 3,30 betätigt werden kann, verbunden ist.

Neben der separaten Überwachung der einzelnen ersten Ableiter 6 besteht auch die Möglichkeit, lediglich die Summe der sie durchfließenden Ströme zu beobachten. Hierfür sind die in den Fig.8.4 und 8.5 dargestellten zwei Möglichkeiten denkbar.

In Fig.8.4 sind für den zweiten Ableiter 5 und für die ersten Ableiter 6 jeweils separate Auslöseeinrichtungen 4, 40 mit dazugehörigen separaten Kontakteinrichtungen 10, 100 vorgesehen; in Fig.8.5 werden die ersten Ableiter 6 und der zweite Ableiter 5 zwar getrennt voneinander überwacht, jedoch von einer gemeinsamen Auslöseeinrichtung 4 überbrückt. Die erwähnten zusätzlichen Detektionseinrichtungen 20, Auswertschaltungen 30 und Auslöseeinrichtungen 40 sind in ihrer Funktion ident den Detektionseinrichtungen 2, Auswertschaltungen 3 und Auslöseeinrichtungen 4, sie werden daher vorzugsweise auch konstruktiv so wie diese ausgeführt.

**Patentansprüche**

1. Schutzschaltungsanordnung für eine in ein Spannungsversorgungsnetz geschaltete Überspannungsableiter-Anordnung, die zwischen dem bzw. den Phasenleitern (L bzw. L1, L2, L3) und dem Neutralleiter (N) oder der Anlagenerde (PE) geschaltete erste Ableiter (6) und einen zwischen Neutralleiter (N) und Anlagenerde (PE) geschalteten zweiten Ableiter (5) aufweist, umfassend eine zumindest den Ableitstrom durch den zweiten Ableiter (5) erfassende Detektionseinrichtung (2) und eine von der Detektionseinrichtung (2) auslösbare Schalteinrichtung, **dadurch gekennzeichnet,** daß die Schalteinrichtung gebildet ist aus einer Kontakteinrichtung (10), welche von einer mit der Detektionseinrichtung (2) verbundenen Auslöseeinrichtung (4) betätigbar ist und den zwischen Neutralleiter (N) und Anlagenerde (PE) liegenden zweiten Ableiter (5) überbrückt und/oder die mit den Überstromschutzeinrichtungen (7) verbundenen Anschlüsse (9) des bzw. der ersten Ableiter (6) gegen den Neutralleiter (N) oder gegen die Anlagenerde (PE) kurzschließt und dadurch die zwischen dem bzw. den Phasenleitern (L bzw. L1, L2, L3) und den ersten Ableitern (6) geschalteten Überstromschutzeinrichtungen (7), vorzugsweise Schmelzsicherungen ansprechen.

2. Schutzschaltungsanordnung nach Anspruch 1, dadurch gekennzeichnet, daß die Detektionseinrichtung (2) über eine Auswertschaltung (3), wie z.B. eine Verzögerungsschaltung, Energiespeicherschaltung od. dgl. mit der Auslöseeinrichtung (4) verbunden ist.

3. Schutzschaltungsanordnung nach Anspruch 2. **dadurch gekennzeichnet,** daß die Auswertschaltung (3) zumindest die vom zweiten Ableiter (5) aufgenommene elektrische Energie erfaßt und beim Erreichen einer vorgebbaren Energiemenge, die kleiner oder gleich dem maximalen Energieaufnahmevermögen des zweiten Ableiters (5) ist, die Auslöseeinrichtung (4) betätigt (Fig. 1.1, 1.3, 2.1, 2.3, 4.1, 4.2).

4. Schutzschaltungsanordnung nach Anspruch 3, **dadurch gekennzeichnet.** daß die Auswertschaltung (3) durch eine Serienschaltung aus einer das Signal der Detektionseinrichtung (2) über die Zeit integrierenden ersten Schaltung (3) und einer Schwellwert-Erkenungsschaltung (3") gebildet ist.

5. Schutzschaltungsanordnung nach Anspruch 3 oder 4, **dadurch gekennzeichnet,** daß zumindest eine weitere. den Ableitstrom durch den bzw. die ersten Ableiter (6) erfassende Detektionseinrichtung (20) und eine damit verbundene weitere, die von dem bzw. den Ableiter(n) (6) aufgenommene elektrische Energie erfassende Auswertschaltung (30) vorgesehen ist, welche Auswertschaltung (30) beim Erreichen einer vorgebbaren Energiemenge, die kleiner oder gleich dem maximalen Energieaufnahmevermögen des bzw. der ersten Ableiter (6) ist, eine weitere Auslöseeinrichtung (40) bzw. die Auslöseeinrichtung (4) betätigt, welche den bzw. die ersten Ableiter (6) mittels einer weiteren Kontaktanordnung (100) bzw. mittels zusätzlicher Kontakte (1) der Kontaktanordnung (10) kurzschließt. (Fig.7, 8).

6. Schutzschaltungsanordnung nach einem der Ansprüche 1 bis 5, **dadurch gekennzeichnet,** daß die Detektionseinrichtungen (2,20) durch Stromwandler, Summenstromwandler od. dgl. gebildet sind.

7. Schutzschaltungsanordnung nach einem der Ansprüche 1 bis 6, **dadurch gekennzeichnet,** daß die Auslöseeinrichtungen (4,40) durch die Erregerwicklung eines Relais oder Schaltschützes und die Kontakteinrichtungen (10,100) durch die Kontakte desselben Relais bzw. Schaltschützes gebildet sind.

8. Schutzschaltungsanordnung nach einem der vorstehenden Ansprüche, **dadurch gekennzeichnet,** daß eine Anzeige, wie z.B. eine optische, akustische od. dgl. vorgesehen ist, die beim Schließen der Kontakteinrichtung (10) gesetzt wird.

9. Schutzschaltungsanordnung nach einem der vorstehenden Ansprüche, **dadurch gekennzeichnet,** daß die Auslöseeinrichtungen (4,40) nach Abklingen oder Unterbrechung des Ableitstromes selbsttätig die Kontakteinrichtungen (10,100) wieder öffnen.

10. Schutzschaltungsanordnung nach Anspruch 8 und 9, **dadurch gekennzeichnet,** daß die Anzeige nach Öffnung der Kontakteinrichtungen (10,100) gesetzt bleibt.

EP 0 860 927 A1

Fig. 1.1

Fig. 1.2

Fig. 1.3

Fig. 2.1    Fig. 2.2    Fig. 2.3

EP 0 860 927 A1

Fig. 3

EP 0 860 927 A1

L

N

7

6  5

10

1

4

W = v · i · t

2

3'

3"

PE

max. Aufnahmevermögen

3

Fig. 4.1

L

N

7

6  5

10

1

4

2

11

3

3"

PE

max. Aufnahmevermögen

3

$\int i \cdot dt$

Fig. 4.2

Fig.5

Fig.6.1

Fig.6.2

Fig.6.3

Fig.6.4

EP 0 860 927 A1

Fig. 7.1

Fig. 7.2

Fig. 8.1

EP 0 860 927 A1

Fig. 8.2

Fig. 8.3

Fig. 8.5

Fig. 8.4

**Europäisches Patentamt**

# EUROPÄISCHER RECHERCHENBERICHT

Nummer der Anmeldung

EP 98 89 0031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO 91 10275 A (ASEA BROWN BOVERI)<br>* Seite 3, Absatz 2 - letzter Absatz; Abbildung 1 *<br>--- | 1 | H02H9/04<br>H02H7/24 |
| A | FR 2 716 307 A (EXCEM)<br>* Seite 11, Zeile 2 - Seite 12, Zeile 24; Abbildung 2 *<br>--- | 1 | |
| A | EP 0 386 288 A (SIEMENS AG)<br>* Spalte 2, Zeile 53 - Spalte 3, Zeile 17; Abbildung 1 *<br>--- | 1,6 | |
| D,A | EP 0 497 752 A (FELTEN & GUILLEAUME AG OESTER)<br>* Zusammenfassung; Abbildung 1 *<br>--- | 6,7 | |
| A | EP 0 678 961 A (FELTEN & GUILLEAUME AG OESTER)<br>* Zusammenfassung; Abbildung 3 *<br>----- | 1,8 | |
| | | | **RECHERCHIERTE SACHGEBIETE** (Int.Cl.6)<br><br>H02H<br>H01T |

Der vorliegende Recherchenbericht wurde für alle Patentansprüche erstellt

| Recherchenort | Abschlußdatum der Recherche | Prüfer |
|---|---|---|
| BERLIN | 24.April 1998 | Hijazi, A |